# EUROPÄISCHE PATENTSCHRIFT

(11) **EP 0 583 721 B1**
(45) Veröffentlichungstag und Bekanntmachung des Hinweises auf die Patenterteilung: **27.11.1996**
(21) Anmeldenummer: 93112833.4
(22) Anmeldetag: 10.08.1993
(51) Int. Cl.: A22C 11/08, F04C 13/00

(54) **Verfahren und Vorrichtung zum portionsweisen Unterteilen einer pastösen und kompressiblen Masse, insbesondere eines Wurstbräts mit Hilfe einer Flügelzellenpumpe**
Method and device for portionally dividing a pasty and compressible mass, in particular soussage mince with a vane pump
Procédé et dispositif pour diviser des matières pâteuses et compressibles, en particulier de pâtes à saucisson à l'aide d'une pompe à palettes

(30) Priorität: 20.08.1992 DE 4227621
(43) Veröffentlichungstag der Anmeldung: 23.02.1994
(73) Patentinhaber: Albert Handtmann Maschinenfabrik GmbH & Co. KG, D-88400 Biberach (DE)
(72) Erfinder: Staudenrausch, Georg, D-88400 Biberach a.d. Riss (DE)
(74) Vertreter: Grünecker, Kinkeldey, Stockmair & Schwanhäusser Anwaltssozietät

(56) Entgegenhaltungen:
- EP-A- 0 432 388
- DE-A- 3 420 344
- FR-A- 405 613
- FR-A- 2 127 456
- GB-A- 780 859
- US-A- 3 320 899

## Beschreibung

Die Erfindung betrifft ein Verfahren zum portionsweisen Unterteilen einer pastösen und kompressiblen Masse, insbesondere eines Wurstbräts mit Hilfe einer Flügelzellenpumpe, in welche das Brät durch einen Einlaß gelangt und anschließend mittels durch die Flügel gebildete umlaufende Förderzellen komprimiert und anschließend durch einen Auslaß ausgestoßen wird.

Außerdem betrifft die Erfindung eine Flügelzellenpumpe zum Durchführen des Verfahrens.

Ein Verfahren und eine Vorrichtung entsprechend den Oberbegriffen der Ansprüche 1 und 4 sind aus der EP-A-0 432 388 bekannt.

Es ist bekannt, zum möglichst genauen Portionieren von Wurstbrät, welches einen mehr oder weniger großen Luftanteil enthält, ein Verfahren anzuwenden, gemäß welchem das lufthaltige Brät mittels einer eigenen Zuführpumpe einem Dosiersystem unter einem Druck zugeführt wird, der den Luftinhalt im Brät auf einen Bruchteil des Normaldruckvolumens komprimiert.

Dadurch wird im Dosiersystem Brät verarbeitet mit minimalen Hohlräumen, so daß eine hohe Gewichtsgenauigkeit erreicht wird. Das Verfahren wurde zunächst realisiert, indem einer Dosierpumpe das Brät durch eine Zuführpumpe unter einem einstellbaren Druck zugeführt wurde. Bei Überschreiten des eingestellten Drucks regelte die Zuführpumpe zurück. Ein Dämpfungszylinder verhinderte Druckspitzen bzw. lieferte notwendiges Brät nach, wenn von der Dosierpumpe mehr verlangt wurde als die Zuführpumpe z.B. beim Start liefern konnte.

Das Verfahren wurde auch mit einer anderen Anordnung realisiert, indem einer Dosierpumpe von einer durchlaufenden Zuführpumpe Brät zugeführt wurde, wobei der Zuführdruck über ein Druckbegrenzungsventil eingestellt wurde. Dabei wurde von der durchlaufenden Zuführpumpe selbstverständlich zuviel Brät geliefert, das über das Druckbegrenzungsventil wieder in einen Trichter der Zuführpumpe zugeleitet wurde.

In beiden Fällen benötigte man zwei Pumpen und Zuführrohre, also Totvolumina. Die Verwendung eines Druckbegrenzungsventils brachte die Gefahr einer Qualitätsbeeinträchtigung des Bräts mit sich.

Der Erfindung liegt die Aufgabe zugrunde, ein Verfahren und eine Vorrichtung gemäß dem Oberbegriff der Ansprüche 1 und 4 so auszugestalten, daß eine hohe Portioniergenauigkeit auf einfachere Art und Weise erzielt wird.

Zur Lösung dieser Aufgabe sieht die Erfindung bei einem Verfahren nach dem Oberbegriff des Anspruchs 1 vor, daß jede mit Brät gefüllte Förderzelle nach dem Kompressionssektor einen zwischen diesem und dem Ausstoßsektor angeordneten Dosiersektor durchläuft, wobei im Grenzbereich zwischen dem Kompressionssektor und dem Dosiersektor mittels einer Ausgleich-Zylinder-Kolbeneinheit eine überschüssige Menge Brät aus der Förderzelle mit hochkomprimiertem Brät in die nachfolgende, mit dem Einlaß noch in Verbindung stehende Förderzelle zurückgedrückt wird.

Zum Durchführen dieses Verfahrens benötigt man somit nur noch eine einzige Flügelzellenpumpe.

Das Verfahren läßt sich gemäß der Erfindung auf einfache Weise so weiterbilden, daß der Ausgleichskolben durch eine vorgespannte Feder gesteuert wird, in dem er zunächst während der Kompression des Bräts im Ausgleichzylinder zurückgedrückt wird, daß der Ausgleichkolben bei noch leicht ansteigendem Kompressionsdruck mit der nachfolgenden Föderzelle in Verbindung kommt und die Druckfeder das im Ausgleichzylinder befindliche Brät in die nachfolgende Förderzelle mittels des Ausgleichkolbens ausschiebt.

Zum Anpassen an die jeweilige Kompressibilität des zu verarbeitenden Bräts kann gemäß der Erfindung die Druckfeder unterschiedlich vorgespannt werden.

Es ist aber auch denkbar, daß die Vorspannung für den Ausgleichkolben über einen Drucksensor elektronisch geregelt wird.

Die Flügelzellenpumpe gemäß dem Oberbegriff des Anspruchs 4 wird gemäß der Erfindung so ausgebildet, daß zwischen dem sich an den Einlaß anschließenden Kompressionssektor und dem Ausstoßsektor ein Dosiersektor angeordnet ist, daß der Winkel des Kompressionssektors etwa gleich groß ist wie der Sektorwinkel einer Förderzelle, daß im Bereich der Innenwand des Pumpengehäuses und - in Drehrichtung des Rotors gesehen - im Endbereich des Kompressionssektors im Boden bzw. im Deckel des Pumpengehäuses ein axial gerichteter, zum Inneren des Pumpengehäuses hin offener Ausgleichzylinder angebracht ist, in welchem ein Ausgleichkolben gleitend gelagert ist, der durch eine Feder in eine vordere Stellung gedrückt ist, in welcher der Kolbenboden mit dem Boden bzw. dem Deckel des Pumpengehäuses bündig verläuft, wobei sich der Ausgleichzylinder sowohl in den Kompressionssektor als auch in den Dosiersektor erstreckt.

Weitere Merkmale und Vorteile der Erfindung ergeben sich aus der nachfolgenden Beschreibung in Verbindung mit der Zeichnung, in welcher zeigen:
- Figur 1: eine Draufsicht auf die Flügelzellenpumpe, wobei der Deckel weggelassen ist, im Schema,
- die Figuren 2 bis 8: jeweils den Sektorbereich zwischen Einlaß und Auslaß in Draufsicht auf das Pumpengehäuse in nacheinanderfolgenden Stellungen einer Förderzelle, und
- Figur 9: einen axialen Teilschnitt durch das Pumpengehäuse und die Ausgleich-Zylinder-Kolbeneinheit.

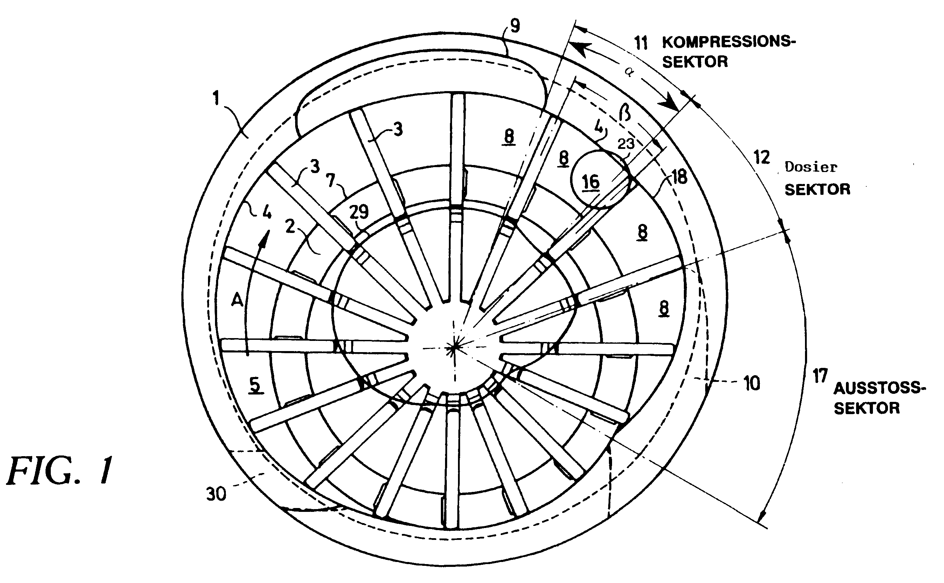

Wie insbesondere aus Figur 1 ersichtlich, besteht die Flügelzellenpumpe aus einem Pumpengehäuse 1 und einem darin exzentrisch angeordneten, in Drehung versetzten Rotor 2 und in diesem radial verschiebbar gelagerten Flügeln 3, die mit der Wandung 4 des Pumpengehäuses 1,dem Boden 5 und dem Deckel 6 des Gehäuses 1 und der Außenfläche 7 des Rotors 2 Förderzellen 8 bilden und im abdichtenden Sinn zusammenwirken, wobei das Pumpengehäuse 1 einen Bräteinlaß 9 und einen Brätauslaß 10 aufweist, zwischen denen sich ein Kompressionssektor 11 befindet.

Nach dem sich unmittelbar an den Bräteinlaß 9 anschließenden Kompressionssektor 11 ist ein Dosiersektor 12 angeordnet.

Der Kompressionssektor 11 weist einen Winkel α auf, der etwa gleich groß ist, wie der Winkel β des Sektors einer Förderzelle 8, der durch die Mittellinien zweier benachbarter Flügel 3 gebildet wird.

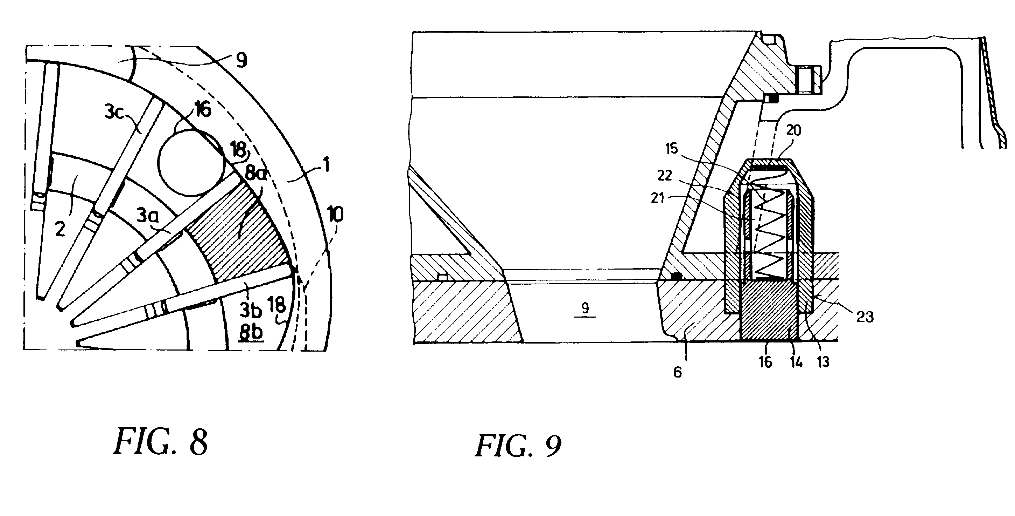

Im Bereich der Innenwand 4 des Pumpengehäuses 1 und - in Drehrichtung des Rotors 2 gesehen - im Endbereich des Kompressionssektors 11 ist im Deckel 6 des Pumpengehäuses 1 ein axial gerichteter Ausgleichzylinder 13 angeordnet (Figur 9). Der Ausgleichzylinder 13 ist zum Inneren des Pumpengehäuses 11 hin offen. Im Ausgleichzylinder 13 ist ein Ausgleichkolben 14 gleitend gelagert. Der Ausgleichkolben 14 weist in seinem rückwärtigen Ende eine axial gerichtete Bohrung 21 auf, in welcher eine Druckfeder 15 gelagert ist, die sich gegen den Boden 20 des Ausgleichzylinders 13 abstützt und unter Vorspannung steht, so daß sie den Ausgleichkolben 14 nach vorwärts, d.h. in Richtung auf das Innere des Pumpengehäuses 1 drückt.

In der in Figur 9 gezeigten vorderen Stellung des Ausgleichkolbens 14 stützt sich dieser auf der Oberkante des Pumpengehäuses 1 an der Stelle 23 (Figur 1) ab.

In dieser vorderen Stellung verläuft der Kolbenboden 16 des Ausgleichkolbens 14 mit der Innenwand des Deckels 6 des Pumpengehäuses 1 bündig, so daß der Kolbenboden mit der Innenwand des Deckels 6 eine glatte Fläche bildet und die Flügel 3 an einem freien Darübergleiten nicht gehindert sind.

Der Ausgleichzylinder 13 ist in eine Sacklochbohrung 23 des Deckels 6 eingepreßt und so fixiert.

Nach Abschwenken (oder öffnen) des Deckels 6 des Pumpengehäuses 1 kann der Ausgleichkolben 14 aus dem Ausgleichzylinder 13 genommen werden.

So kann beispielsweise die Feder 15 durch eine stärkere oder schwächere Druckfeder ausgewechselt werden.

Der Durchmesser des Ausgleichzylinders 13 bzw. des Ausgleichkolbens 14 ist so gewählt, daß er sich mit Rücksicht auf die oben beschriebene Lage sowohl in den Kompressionssektor 11 als auch in den Dosiersektor 12 erstreckt.

In den Figuren 1 bis 8 ist der Kolbenboden 16 des Ausgleichkolbens 14 schematisch als Kreis dargestellt.

Wie insbesondere aus Figur 1 ersichtlich, weist die Innenwand 4 des Pumpengehäuses 1 einen von einem Kreisbogen abweichenden Konturenverlauf 18 auf, der den Kompressionssektor 11 und den Ausstoßsektor 17 bestimmt. Im Bereich des Dosiersektors 12 verläuft die Kontur nach einem Kreisbogen mit dem Mittelpunkt im Rotor-Mittelpunkt.

Der Rotor 2 dreht sich zusammen mit den Flügeln 3 in Pfeilrichtung A.

In Figur 1 ist der Kompressionssektor 11 mit dem Winkeln α ferner der anschließende Dosiersektor 12 und der Ausstoßsektor 17 in ihren Lagen zueinander dargestellt.

Die Förderzellen 8 durchlaufen jeweils in Pfeilrichtung A nacheinander den Kompressionssektor 11, den Dosiersektor 12 und den Ausstoßsektor 17.

Während jede gefüllte Förderzelle 8 den Kompressionssektor durchläuft, erfolgt aufgrund des Konturenverlaufes 18 eine Kompression des in der jeweiligen Förderzelle befindlichen Bräts derart, daß das Brät je nach Kompressibilität entsprechend der Volumenverkleinerung verdichtet wird.

Die Förderzelle mit verdichtetem Brät gelangt anschließend in den Dosiersektor 12. Dort verläuft zwar die Kontur nach einem Kreisbogen, das Brät wird aber dennoch noch etwas mehr verdichtet, so lang der nachlaufende Flügel 3a der Förderzelle 8a noch den Kompressionssektor 11 durchläuft.

Das spezifische Gewicht des komprimierten Volumens in dieser Förderzelle entspricht weitgehend dem unter höherem Druck stehenden Volumen im Ausstoßsektor 17; dadurch wird ein Pulsieren praktisch verhindert.

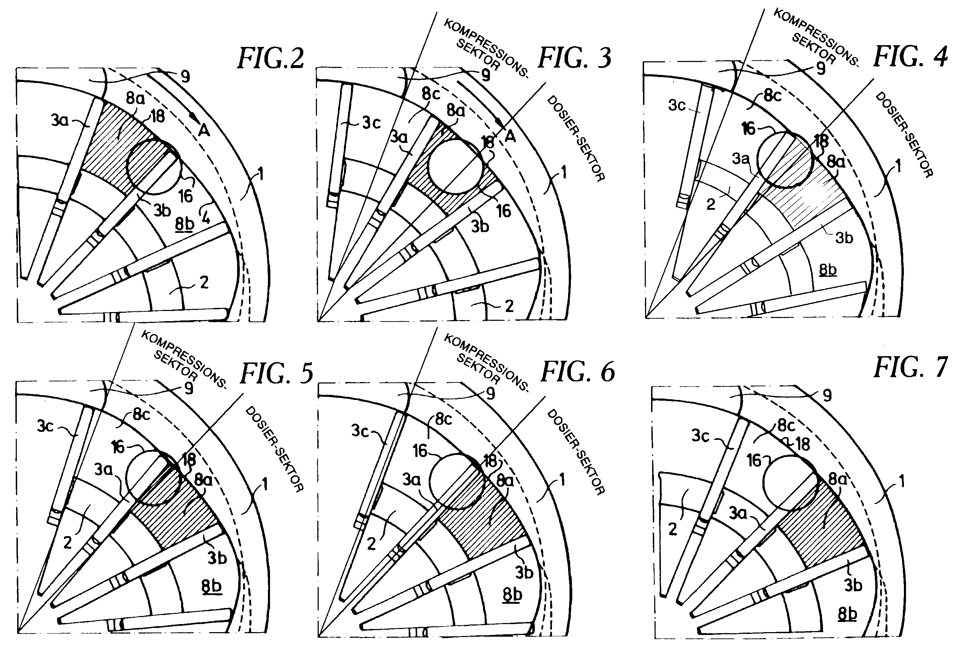

Die Funktionsweise des Ausgleichzylinders 13 bzw. des Ausgleichkolbens 14 wird anhand der Figuren 2 bis 8 im nachfolgenden erläutert.

In Figur 2 ist eine mit Brät gefüllte Förderzelle 8a in einer Stellung dargestellt, wo der nachlaufende Flügel 3a die hintere Kante des Bräteinlasses 9 soeben überlaufen hat, so daß die Förderzelle 8a vollkommen geschlossen ist. Die Förderzelle 8a bewegt sich nun weiter im Uhrzeigersinn, wobei mit Rücksicht auf den Konturenverlauf 18 der Innenwandung 4 das Volumen der Förderzelle 8a verkleinert und auf diese Art und Weise das Brät in der Förderzelle zunehmend komprimiert wird.

Der Kolbenboden 16 des Ausgleichkolbens 14 erstreckt sich in dieser Stellung der Förderzelle 8a bzw. der vorauslaufenden Förderzelle 8b über diese beiden Förderzellen. Der Druck der Feder 15 für den Ausgleichkolben 14 ist jedoch so stark, daß der Kolben zunächst durch das Brät nicht zurückgedrückt werden kann, so daß das Brät an dieser Stelle nicht ausweichen kann.

In Figur 3 ist gezeigt, wie die Förderzelle 8a infolge der Drehung des Rotors 2 in eine Stellung gelangt ist, wo sie zwar noch überwiegend im Kompressionssektor 11 ist, aber bereits zum Teil sich in den Dosiersektor 12 hinein erstreckt. Während der Bewegung der Förderzelle 8a von der Stellung gemäß Figur 2 in die Stellung gemäß Figur 3 erfolgt eine weitere Steigerung des Kompressionsdrucks, der je nach Kompressibilität des Bräts so hoch wird, daß der Ausgleichkolben 14 zurückgedrückt wird, d.h. der Druck der Feder 15 überwunden wird. Während der Kolben 14 zurückweicht, füllt sich der Raum im Ausgleichzylinder 13 mit Brät.

In der in Figur 4 gezeigten Stellung der mit Brät gefüllten und komprimierten Förderzelle 8a hat diese den Kompressionssektor weitgehend durchlaufen und der Kompressionsdruck nähert sich einem Maximum.

Die nachfolgende Förderzelle 8c ist bereits mit Brät gefüllt, sie steht jedoch noch in Verbindung mit dem Bräteinlaß 9, weil der nachlaufende Flügel 3c die Abschlußkante des Bräteinlasses 9 noch nicht erreicht hat.

Der Vollständigkeit halber soll noch erwähnt werden, daß das Füllen des Brätes in die Förderzellen bevorzugt auch mit Vakuum erfolgt, was ein raschen Füllen der Förderzellen begünstigt.

In der in Figur 4 gezeigten Stellung der Förderzelle 8a erstreckt sich der Kolbenboden 16 sowohl über die Förderzelle 8a mit dem hohen Kompressionsdruck des Brätes als auch in die Förderzelle 8c, die mit noch nicht komprimiertem Brät gefüllt ist.

Der mit dem Brät gefüllte Raum im Ausgleichzylinder 13 ist also sowohl mit der Förderzelle 8a verbunden, wo das Brät bereits nahezu maximal komprimiert ist, als auch mit der Förderzelle 8c, wo das Brät noch keine Kompression erfahren hat.

Infolgedessen preßt die Druckfeder 15 den Ausgleichkolben 14, der teilweise vom Kompressionsdruck entlastet ist, nach vorn und schiebt dabei das im Raum des Ausgleichzylinders 13 befindliche Brät aus der Förderzelle 8a in die nachfolgende Förderzelle 8c.

Dieser Vorgang setzt sich über die Stellung gemäß Figur 5 noch so lange fort, bis die Förderzelle 8c die Stellung gemäß Figur 6 erreicht hat, also vollkommen geschlossen ist. Bis dahin erfolgt immer eine leichte Kompressionssteigerung, so lange sich der nachlaufende Flügel 3a noch im Kompressions-Sektor 11 bewegt.

In der Stellung gemäß Figur 6 ist das Brät in der Förderzelle 8a maximal verdichtet, eine weitere Verdichtung findet nicht mehr statt.

So weist das Brät in der Förderzelle 8a in der Stellung gemäß Figur 7 den gleichen Kompressionsdruck auf wie in der Stellung gemäß Figur 6.

Auf diese Art und Weise wird durch die Einstellung des maximalen Kompressionsdruckes eine Verschiebung des überschüssigen Brätes in der Förderzelle 8a und dann in gleicher Weise in den jeweiligen nachfolgenden Förderzellen erzielt, so daß schließlich jede Förderzelle die gleiche Menge Brät in der selben Konsistenz ausschiebt. Die Inhalte der Förderzellen sind im Ausstoßsektor praktisch völlig gewichtsgleich.

Wenn die Förderzellen 8a und 8c die Stellung gemäß Figur 7 erreicht haben, erstreckt sich zwar der Kolbenboden 16 noch in einem ganz kleinen Bereich in die Förderzelle 8a hinein, die nachlaufende Förderzelle 8c ist aber bereits völlig geschlossen und befindet sich schon im Kompressionssektor, so daß im wesentlichen kein Überschieben des Bräts aus der Förderzelle 8a in die Förderzelle 8c mehr erfolgt.

In der in Figur 8 gezeigten Stellung der Förderzelle 8a überläuft der vorauslaufende Flügel 3b der Förderzelle 8a gerade die vordere Kante des Brätauslasses 10 (gestrichelt gezeichnet).

Für die Erreichung der angestrebten besonders hohen Portioniergenauigkeit ist es von wesentlicher Bedeutung, daß mit der geschilderten Einrichtung in jeder Stellung der Förderzellen Dichtheit zwischen Brätauslaß und Bräteinlaß gegeben ist. Die sich zum Auslaß öffnende Kammer steht unter einem definierten hohen Druck und hat keine Verbindung zum Einlaß.

Durch Veränderung der Kraft der Feder 15 für den Ausgleichkolben 14 kann der Kompressionsdruck an den Ausstoßdruck angepaßt werden. Somit ist Pulsieren sowohl aus der Kammer als auch in die Kammer vermieden, so daß auf diese Art und Weise im Zusammenhang mit den geschilderten Maßnahmen höchste Gewichtsgenauigkeit erzielt wird.

Dabei wird der einstellbare maximale Kompressionsdruck in den Förderzellen dazu benützt, überschüssiges Brät in der komprimierten Förderzelle in die nachlaufende Zelle jeweils zu überschieben.

Aus der Beschreibung geht hervor, daß eine sehr hohe Dosiergenauigkeit mit verhältnismäßig einfachen Mitteln erzielt wird. Dies wird dadurch erreicht, daß der Befüll- und Dosiervorgang in ein und dasselbe Förderwerk (Flügelzellenpumpe) verlegt wird. Die Befüllung unter konstantem Druck wird im Kompressionssektor durchgeführt, wobei der am Ende dieses Bereiches liegende Ausgleichzylinder nur mit einer geringen Überfüllmenge unter begrenztem Befülldruck beaufschlagt wird und diese Überfüllmenge sogleich in die nachfolgende, zum Einlaß noch offene Förderzelle abgegeben wird.

Das Dosieren findet im Dosier-Sektor statt.

Nachdem Zuführen und Dosieren im gleichen Förderwerk, d.h. mechanisch gekoppelt stattfindet, erübrigt sich ein Rückfördern größerer Brätmengen über ein Druckbegrenzungsventil oder/und das Stillsetzen einer Zuführpumpe bei Erreichen des Befülldruckes.

Weder ein Zu- und Abregeln der Zuführung bei ungleich verlaufendem Dosierstrom noch ein Speicher-Zylinder zur Aufrechterhaltung des Zuführdruckes, z.B. beim Start, ist erforderlich.

## Patentansprüche

1. Verfahren zum portionsweisen Unterteilen einer pastösen und kompressiblen Masse, insbesondere eines Wurstbräts mit Hilfe einer Flügelzellenpumpe in welche das Brät durch einen Einlaß (9) gelangt und anschließend mittels durch Flügel (3) gebildete umlaufende Förderzellen (8) komprimiert und anschließend durch einen Auslaß (10) ausgeschoben wird, **dadurch gekennzeichnet,** daß jede mit Brät gefüllte Förderzelle (8) nach dem Kompressionssektor (11) einen zwischen diesem und dem Ausstoßsektor (17) angeordneten Dosiersektor (12) durchläuft, wobei im Grenzbereich zwischen dem Kompressionssektor (11) und dem Dosiersektor (12) mittels einer Ausgleich-Zylinder-Kolbeneineinheit (13,14) eine überschüssige Menge Brät aus der Förderzelle (8) mit hochkomprimiertem Brät in die nachfolgende mit dem Einlaß (9) noch in Verbindung stehende Förderzelle (8) zurückgedrückt wird.

2. Verfahren nach Anspruch 1, **dadurch gekennzeichnet,** daß der Ausgleichkolben (14) durch eine vorgespannte Feder (15) gesteuert wird, indem er zunächst während der Kompression des Bräts im Ausgleichzylinder (13) zurückgedrückt wird, daß der Ausgleichkolben (14) bei noch leicht ansteigendem Kompressionsdruck mit der nachfolgenden Förderzelle (8) in Verbindung kommt und die Druckfeder (15) das im Ausgleichzylinder (13) befindliche Brät in die nachfolgende Förderzelle (8) mittels des Ausgleichkolbens (14) ausschiebt.

3. Verfahren nach Anspruch 2, **dadurch gekennzeichnet,** daß die Druckfeder (15) je nach der Kompressibilität des Bräts vorgespannt wird.

4. Flügelzellenpumpe zum portionsweisen Unterteilen einer pastösen und kompressiblen Masse, insbesondere Wurstbrät, die aus einem Pumpengehäuse (1) und einem darin exzentrisch angeordneten, in Drehung versetztbaren Rotor (2) und in diesem radial verschiebbar gelagerten Flügeln (3) besteht, die mit der Wandung (4) des Pumpengehäuses (1), dem Boden (5) und dem Deckel (6) des Gehäuses (1) und der Außenfläche (7) des Rotors (2) Förderzellen (8) bilden und im abdichtenden Sinn zusammenwirken, wobei das Pumpengehäuse (1) einen Bräteinlaß (9) und einen Brätauslaß (10) aufweist, zwischen denen sich ein Kompressionssektors (11) befindet, zum Durchführen des Verfahrens nach Anspruch 1, **dadurch gekennzeichnet,** daß zwischen dem sich an den Einlaß (9) anschließenden Kompressionssektor (11) und dem Ausstoßsektor (17) ein Dosiersektor (12) angeordnet ist, daß der Winkel (α) des Kompressionssektors (11) etwa gleich groß ist wie der Sektorwinkel (β) einer Förderzelle (8), daß im Bereich der Innenwand (4) des Pumpengehäuses (1) und - in Drehrichtung des Rotors (2) gesehen - im Endbereich des Kompressionssektors (11) im Boden (5) bzw. im Deckel (6) des Pumpengehäuses (1) ein axial gerichteter zum Innneren des Pumengehäuses (1) hin offener Ausgleichzylinder (13) angebracht ist, in welchem ein Ausgleichkolben (14) gleitend gelagert ist, der durch eine Feder (15) in eine vordere Stellung gedrückt ist, in welcher der Kolbenboden (16) mit dem Boden (5) bzw. dem Deckel (6) des Pumpengehäuses (1) bündig verläuft, wobei sich der Ausgleichzylinder (13) sowohl in den Kompressionssektor (11) als auch in den Dosiersektor (12) erstreckt.

5. Flügelzellenpumpe nach Anspruch 4, **dadurch gekennzeichnet,** daß die Vorspannung der Druckfeder (15) verstellbar ist.

## Claims

1. Process for subdividing a pasty and compressible mass into portions, especially a sausage meat mass, with the aid of a vane-cell pump into which the sausage meat mass comes through an inlet (9) and is subsequently compressed by means of revolving conveyor cells (8) formed by vanes (3) and subsequently pushed out through an outlet (10), characterised in that each conveyor cell (8) filled with sausage meat mass, after the compression sector (11) passes through a metering sector (12) arranged between the latter and the ejection sector (17), in the boundary region between the compression sector (11) and the metering sector (12) any excess quantity of sausage meat mass being pushed back by means of a compensating cylinder-piston unit (13, 14) out of the conveyor cell (8) with highly compressed sausage meat mass into the following conveyor cell (8) still connected to the inlet (9).

2. Process according to Claim 1, characterised in that the compensating piston (14) is controlled by a pretensioned spring (15) by firstly pushing it back during the compression of the sausage meat mass in the compensating cylinder (13), that the compensating piston (14) comes into connection with the following conveyor cell (8) while the compression pressure is still rising slightly and the compression spring (15) pushes the sausage meat mass located in the compensating cylinder (13) into the following conveyor cell (8) by means of the compensating piston (14).

3. Process according to Claim 2, characterised in that the compression spring (15) is pretensioned depending on the compressibility of the sausage meat mass.

4. Vane-cell pump for subdividing a pasty and compressible mass into portions, especially a sausage meat mass, which consists of a pump housing (1) and a rotor (2) capable of being set in rotation arranged eccentrically therein and of vanes (3) mounted in radially displaceable manner in the latter, which with the wall (4) of the pump housing (1), the base (5) and the cover (6) of the housing (1) and the outer surface (7) of the rotor (2) form conveyor cells (8) and interact in the sense of sealing, the pump housing (1) comprising a sausage meat mass inlet (9) and a sausage meat mass outlet (10) between which is located a compression sector (11) for carrying out the process according to Claim 1, characterised in that between the compression sector (11) adjoining the inlet (9) and the ejection sector (17) a metering sector (12) is arranged, that the angle (α) of the compression sector (11) is approximately the same size as the sector angle (β) of a conveyor cell (8), that in the region of the inner wall (4) of the pump housing (1) and - viewed in the direction of rotation of the rotor (2) - in the end region of the compression sector (11) fitted in the base (5) or in the cover (6) of the pump housing (1) there is an axially aligned compensating cylinder (13) open towards the interior of the pump housing (1) in which there is mounted in sliding manner a compensating piston (14) which is pushed by a spring (15) into a forward position in which the piston base (16) extends flush with the base (5) or the cover (6) of the pump housing (1), the compensating cylinder (13) extending both into the compression sector (11) as well as into the metering sector (12).

5. Vane-cell pump according to Claim 4, characterised in that the pretensioning of the compression spring (15) is adjustable.

## Revendications

1. Procédé pour diviser en portions une masse pâteuse et compressible, en particulier de la pâte à saucisson à l'aide d'une pompe à palettes multicellulaire, dans lequel la pâte arrive par une entrée (9) et est ensuite, par l'intermédiaire de cellules de transport (8) tournantes constituées par des palettes (3), comprimée et ensuite expulsée par une sortie (10), caractérisé en ce que chacune des cellules de transport (8) remplies de pâte parcourt, à la suite du secteur de compression (11), un secteur de dosage (12) disposé entre celui-ci et le secteur d'éjection (17), et que, dans la zone limitrophe entre le secteur de compression (11) et le secteur de dosage (12), une quantité de pâte excédentaire provenant de la cellule de transport (8) est, par l'intermédiaire d'un ensemble piston et cylindre de compensation (13, 14), refoulée avec de la pâte fortement comprimée, dans la cellule de transport (8) suivante, encore en communication avec l'entrée (9).

2. Procédé selon la revendication 1, caractérisé en ce que le piston de compensation (14) est commandé par un ressort précontraint (15), tandis qu'il est tout d'abord, durant la compression de la pâte, repoussé en arrière dans le cylindre de compensation (13), que le piston de compensation (14), avec une pression de compression augmentant encore légèrement, vient en communication avec la cellule de transport (8) suivante et que le ressort de pression (15) pousse la pâte qui se trouve dans le cylindre de compensation (13) dans la cellule de transport (8) suivante par l'intermédiaire du piston de compensation (14).

3. Procédé selon la revendication 2, caractérisé en ce que le ressort de pression (15) est précontraint en fonction de la compressibilité de la pâte.

4. Pompe à palettes multicellulaire pour diviser en portions une masse pâteuse et compressible, en particulier de la pâte à saucisson, qui se compose d'un carter de pompe (1) et d'un rotor (2) décalé en rotation, disposé excentriquement à l'intérieur de celui-ci et de palettes (3) montées pour pouvoir se déplacer radialement dans celui-ci, qui, avec la paroi (4) du carter de pompe (1), le fond (5) et le couvercle (6) du carter (1) et la surface extérieure (7) du rotor (2), constituent des cellules de transport (8) et dans le sens de l'étanchement fonctionnent conjointement, le carter de pompe (1) comportant une entrée de pâte (9) et une sortie de pâte (10), entre lesquelles se trouve un secteur de compression (11), pour la mise en oeuvre du procédé selon la revendication 1, caractérisée en ce qu'entre le secteur de compression (11) se trouvant immédiatement après l'entrée (9) et le secteur d'éjection (17) se trouve un secteur de dosage (12), que l'angle (α) du secteur de compression (11) est sensiblement égal à l'angle de secteur (β) d'une cellule de transport (8), que dans la zone de la paroi intérieure (4) du carter de pompe (1) et, en regardant dans le sens de la rotation du rotor (2), dans la zone d'extrémité du secteur de compression (11), dans le fond (5) ou dans le couvercle (6) du carter de pompe (1) est disposé un cylindre de compensation (13) orienté axialement, ouvert vers l'intérieur du carter de pompe (1), dans lequel un piston de compensation (14) est monté de manière coulissante, qui est poussé dans une position avancée par le ressort (15), dans lequel le fond de piston (16) vient en affleurement du fond (5) ou du couvercle (6) du carter de pompe (1), le cylindre de compensation (13) s'étendant à la fois dans le secteur de compression (11) et dans le secteur de dosage (12).

5. Pompe à palettes selon la revendication 4, caractérisée en ce que la précontrainte du ressort de pression (15) est réglable.
